# EUROPÄISCHE PATENTSCHRIFT

(11) **EP 0 651 709 B1**
(45) Veröffentlichungstag und Bekanntmachung des Hinweises auf die Patenterteilung: **18.12.1996**
(21) Anmeldenummer: 93917606.1
(22) Anmeldetag: 21.07.1993
(51) Int. Cl.: B62D 5/08

(54) **HILFSKRAFTLENKUNG, INSBESONDERE FÜR KRAFTFAHRZEUGE**
POWER ASSISTED STEERING SYSTEM, IN PARTICULAR FOR MOTOR VEHICLES
DIRECTION ASSISTEE, NOTAMMENT POUR VEHICULES A MOTEUR

(30) Priorität: 25.07.1992 DE 4224650
(43) Veröffentlichungstag der Anmeldung: 10.05.1995
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE)
(86) Internationale Anmeldenummer: EP9301926
(87) Internationale Veröffentlichungsnummer: WO9402345

(56) Entgegenhaltungen:
- DE-A- 3 122 369
- DE-A- 3 248 252

## Beschreibung

Die Erfindung betrifft eine Hilfskraftlenkung, insbesondere für Kraftfahrzeuge, nach dem Oberbegriff des Anspruches 1. Eine derartige Hilfskraftlenkung enthält einen Servomotor, eine Servopumpe, einen Behälter, ein Steuerventil, das von der Servopumpe gefördertes Druckmittel dem Servomotor zusteuert. Außerdem enthält die Hilfskraftlenkung ein Steuerorgan, dessen Drosselquerschnitt in Abhängigkeit von der Fahrzeuggeschwindigkeit veränderbar ist. Das Steuerventil ist als Vierwegeventil ausgebildet. Es ist mit einer steuerbaren Rückwirkungseinrichtung versehen und weist einen Zulaufanschluß, einen Rücklaufanschluß und zwei Arbeitsanschlüsse für die zu den beiden Arbeitsräumen des Servomotors führenden Leitungen auf.

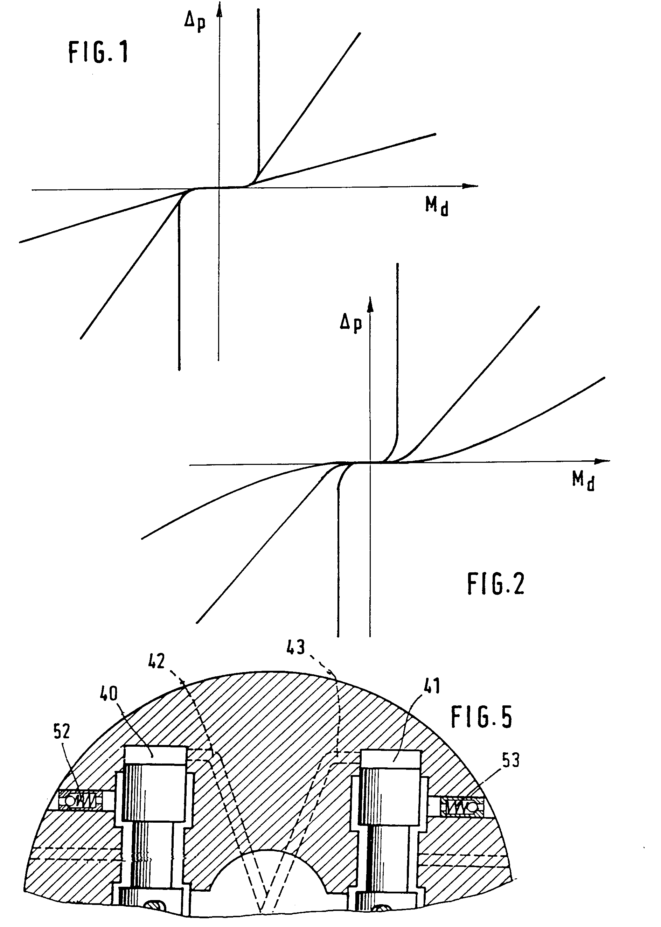

Eine derartige Hilfskraftlenkung ist bekannt aus der DE-C2-31 22 369. In dieser Hilfskraftlenkung ist die hydraulische Rückwirkung während des Betriebes veränderbar, beispielsweise über den Fahrzeugtachometer in Abhängigkeit von der Fahrzeuggeschwindigkeit. Dadurch ergibt sich eine Charakteristik des Steuerventils, wie sie in Fig. 1 dargestellt ist.

Beim Parkieren arbeitet das Steuerventil ohne hydraulische Rückwirkung, d. h., als Betätigungsmoment am Lenkhandrad muß nur die mechanische Mittenzentrierung des Steuerventils überwunden werden. Danach setzt die volle hydraulische Unterstützung zur Bewegung der gelenkten Fahrzeugräder (steile Kennlinie) ein. Beginnt das Fahrzeug zu Rollen, so muß zur mechanischen Mittenzentrierung ein zusätzliches, von der hydraulischen Rückwirkungseinrichtung erzeugtes, druckabhängiges Betätigungsmoment überwunden werden, das mit zunehmender Fahrzeuggeschwindigkeit ansteigt (flachere Kennlinie). Dabei erhält man durch die kleineren Parkierkräfte wohl einen guten Parkierkomfort und durch die Rückmeldung der Kräfte an den gelenkten Fahrzeugrädern auf das Lenkhandrad bei schneller Fahrt auch in diesem Bereich gute Eigenschaften. Die Parkierkräfte können jedoch nie kleiner sein als die mechanischen Zentrierkräfte. Bei Lenkkorrekturen im Geradeausfahrtbereich treten aber an den gelenkten Fahrzeugrädern so kleine Reaktionskräfte auf, daß aus Gründen der Fahrsicherheit bei hohen Geschwindigkeiten diese Kräfte voll auf das Lenkhandrad übertragen werden sollten. Dies ist wiederum nur mit einer entsprechend hohen mechanischen Mittenzentrierung möglich, weil dann die hydraulische Unterstützung erst später einsetzt.

Im Parkierbereich sollen die mechanischen Zentrierkräfte so niedrig wie möglich gehalten werden. Bei schneller Geradeausfahrt, bei der die Servounterstützung stark reduziert sein soll, ist jedoch eine starke mechanische Mittenzentrierung erwünscht, um ein exaktes Fahrgefühl zu erreichen. Diese beiden Forderungen widersprechen einander. Die Auslegung der mechanischen Mittenzentrierung kann deshalb nach dem Stand der Technik immer nur ein Kompromiß sein zwischen den beiden Forderungen.

Der Erfindung liegt die Aufgabe zugrunde, die bekannte Hilfskraftlenkung derart zu verbessern, daß nicht nur die Höhe der hydraulischen Rückwirkung, sondern auch das Einsetzen der Servounterstützung steuerbar ist.

Diese Aufgabe wurde bereits in der DE-C2-32 48 252 dadurch gelöst, daß eine zusätzliche Steuerkante angeordnet ist entweder zwischen der jeweiligen Zulauf-Steueröffnung und dem zugehörigen Arbeitsanschluß oder zwischen der Zulauf-Steueröffnung und der Rücklauf-Steueröffnung. Diese zusätzliche Steuerkante erzeugt einen Stau, der die Rückwirkungsräume mit Druck beaufschlagt, ohne daß im Arbeitszylinder ein entsprechender Differenzdruck entsteht. Dadurch ergibt sich eine Verbreiterung des Kennlinien-Verlaufes im unteren Bereich nach Fig. 2 , wodurch der Straßenkontakt bei kleinen Lenkmomenten, d. h. im Geradeausfahrtbereich, verbessert wird.

Da diese zusätzliche Steuerkante im Hauptstrom liegt und wegen der dort herrschenden engen Spalte die Strömung einen stark laminaren Anteil hat, ergibt sich eine hohe Temperaturabhängigkeit des Ventilsystems. Außerdem ist für den Aufbau des Rückwirkungsdruckes ein gewisser Weg des Steuerventils erforderlich, der die wirksame Steifigkeit des Lenksystems gerade im Mittenbereich verringert.

Die Lösung der vorliegenden Erfindung vermeidet die Nachteile der bekannten Ausführung dadurch, daß zwischen der Rückwirkungseinrichtung und dem Zulauf zum Steuerventil wenigstens eine Einrichtung zum Anstauen des Druckmittelstromes angeordnet ist. Der Vorteil dieser Ausführung besteht darin, daß der Stau nicht mit Hilfe einer zusätzlichen Steuerkante erzeugt wird, die im Hauptstrom liegt, sondern durch die Ausnützung der Strömungswiderstände entweder einer dem Zulauf zum Steuerventil vorgeschalteten Drossel, eines an der gleichen Stelle angeordneten, federbelasteten Stauventils oder eines Strombegrenzungsventils. Diese vorteilhaften und zweckmäßigen Ausgestaltungen der Erfindung sind in den Unteransprüchen angegeben.

Die Erfindung ist jedoch nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Im folgenden wird die Erfindung anhand mehrerer in der Zeichnung dargestellter Ausführungsbeispiele näher erläutert. Es zeigt
- Fig. 1: das Kennlinienfeld eines Steuerventils mit relativ hoher, mechanischer Mittenzentrierung;
- Fig. 2: das Kennlinienfeld eines Steuerventils mit relativ niedriger, mechanischer Mittenzentrierung und zusätzlicher hydraulischer Mittenzentrierung;
- Fig. 3: die erfindungsgemäße Hilfskraftlenkung in prinzipieller Darstellung;
- Fig. 3A und 3B: zwei Ausführungsbeispiele der Hilfskraftlenkung mit verschiedenen Einrichtungen zum Anstauen des Druckmittelstromes;
- Fig. 4 und 5: zwei Ausführungsbeispiele der Hilfskraftlenkung mit einem Querschnitt durch ein als Drehkolbenventil ausgebildetes Steuerventil in schematischer Darstellung;
- Fig. 6: ein weiteres Ausführungsbeispiel der Hilfskraftlenkung mit einem als Drehschieberventil ausgebildeten Steuerventil in schematischer Darstellung.

Die Hilfskraftlenkung enthält in einem nicht dargestellten Lenkgetriebe ein Steuerventil 1, über das einem Servomotor 2 Druckmittel von einer Servopumpe 3 zugeführt und von dort in einen Behälter 4 zurückgeführt wird.

Das Steuerventil 1 ist mit einer steuerbaren Rückwirkungseinrichtung 5 versehen. Es ist als Vierwegeventil ausgebildet und weist einen Zulaufanschluß 6, einen Rücklaufanschluß 7 und zwei Arbeitsanschlüsse 8 und 10 auf, die mit zwei zu den beiden Arbeitsräumen des Servomotors 2 führenden Leitungen 11 bzw. 12 verbunden sind. Zwischen der Rückwirkungseinrichtung 5 und dem Zulaufanschluß 6 ist eine Einrichtung 13 zum Anstauen des Druckmittelstromes angeordnet.

In dem ersten Ausführungsbeispiel besteht das Steuerventil 1 im wesentlichen aus einem in einem Lenkgehäuse 14 drehbaren Ventilgehäuse 15, in dem zwei Ventilkolben 16 und 17 durch zwei Zapfen 18 und 20 eines nicht dargestellten, gabelförmigen Endes einer Lenkspindel zwangläufig verschiebbar sind. Das Druckmittel wird dem Steuerventil 1 von der Servopumpe 3 in einer Ringnut 21 des Lenkgehäuses 14 zugeführt. Von dort gelangt es über je einen Zulaufanschluß 22 bzw. 23 in Ringnuten 24 bzw. 25 des Ventilgehäuses 15. In der Neutralstellung des Steuerventils 1 besteht eine Verbindung von den Ringnuten 24 und 25 des Ventilgehäuses 15 über je eine Zulauf-Steueröffnung 26 bzw. 27, eine Kolbenringnut 28 bzw. 30 und eine Rücklauf-Steueröffnung 31 bzw. 32 zu dem Rücklaufanschluß 7. Die Zulauf-Steueröffnungen 26 und 27 und die Rücklauf-Steueröffnungen 31 und 32 sind zwischen den Ventilkolben 16 und 17 und den zugehörigen Venbilbohrungen gebildet.

Zwischen dem Zulaufanschluß 22 bzw. 23 und dem Rücklaufanschluß 7 liegt jeweils ein Arbeitsanschluß 8 bzw. 10 der einerseits mit der Kolbenringnut 28 bzw. 30 und andererseits mit einer der zu dem Servomotor 2 führenden Leitungen 11 bzw. 12 in Verbindung steht.

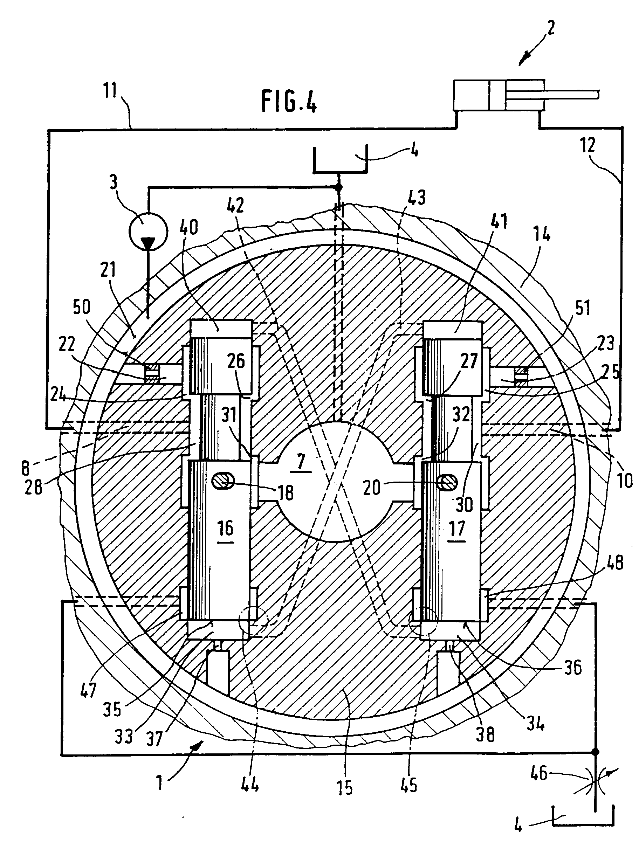

Für jeden Arbeitsraum des Servomotors 2 ist in dem Steuerventil 1 wenigstens ein Rückwirkungsraum vorgesehen. In dem Ausführungsbeispiel der Fig. 4 ist an einem Ende jedes Ventilkolbens 16 bzw. 17 ein Rückwirkungsraum 33 bzw. 34 angeordnet, der an eine Stirnfläche 35 bzw. 36 des jeweiligen Ventilkolbens 16 bzw. 17 angrenzt. Die Rückwirkungsräume 33 und 34 stehen über je eine feste Drosselstelle 37 bzw. 38 in Verbindung mit der Ringnut 21 und damit mit der Servopumpe 3.

Da in dem Ausführungsbeispiel das Steuerventil 1 zwei Ventilkolben 16 und 17 aufweist, können an den, den Rückwirkungsräumen 33 und 34 gegenüberliegenden Stirnflächen der Ventilkolben 16 und 17 zwei weitere Rückwirkungsräume 40 und 41 angeordnet sein, die über Kanäle 42 und 43 kreuzweise mit den Rückwirkungsräumen 33 bzw. 34 verbunden sind.

Die Rückwirkungsräume 33 und 34 können über je ein Steuerkantenpaar 44 bzw. 45 bei einer Verschiebung der Ventilkolben 16 und 17 aus ihrer Neutralstellung über ein Steuerorgan 46 mit dem Behälter 4 verbunden werden. Der Drosselquerschnitt des Steuerorgans 46 ist in Abhängigkeit von der Fahrzeuggeschwindigkeit veränderbar. Die Steuerkantenpaare werden gebildet zwischen dem Ventilkolben 16 bzw. 17 und je einer Gehäuseringnut 47 bzw. 48. In der Neutralstellung der Ventilkolben 16 und 17 weisen die Steuerkantenpaare 44 und 45 Null-Überdeckung auf.

In diesem Ausführungsbeispiel wird die Rückwirkungseinrichtung 5 gebildet durch die beiden Steuerkantenpaare 44, 45, die Rückwirkungsräume 33, 34, 40, 41 und das Steuerorgan 46.

Zwischen den festen Drosselstellen 37 und 38 einerseits, die der Rückwirkungseinrichtung 5 vorgeschaltet sind, und den Zulauf-Steueröffnungen 26 und 27 andererseits, die in diesem Ausführungsbeispiel die tatsächlich wirksamen Zulaufanschlüsse darstellen, ist die Einrichtung 13 zum Anstauen des Druckmittelstromes angeordnet. Diese Einrichtung zum Anstauen des Druckmittelstromes wird in dem Ausführungsbeispiel der Fig. 4 aufgeteilt und durch je eine Drossel 50 bzw. 51 gebildet, die der jeweiligen Zulauf-Steueröffnung 26 bzw. 27 vorgeschaltet ist.

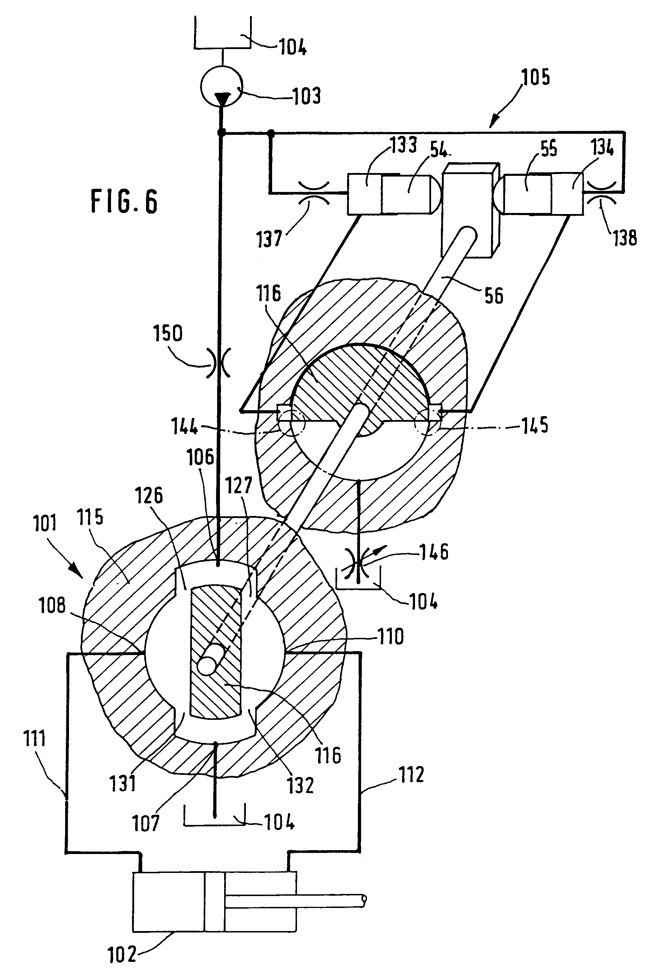

In dem Ausführungsbeispiel nach Fig. 5 ist die Einrichtung 13 zum Anstauen des Druckmittelstromes durch je ein federbelastetes Stauventil 52 bzw. 53 gebildet, das der jeweiligen Zulauf-Steueröffnung 26 bzw. 27 vorgeschaltet ist.

Im folgenden wird die Funktion der Hilfskraftlenkung anhand des in Fig. 4 dargestellten Ausführungsbeispieles erläutert:
In der dargestellten Neutralstellung passiert der Druckmittelstrom zunächst die Drossel 50 bzw. 51 und die Zulauf-Steueröffnung 26 bzw. 27. Dann wird der Druckmittelstrom über die Rücklauf-Steueröffnung 31 bzw. 32 über den Rücklaufanschluß 7 zum Behälter 4 zurückgeführt und erzeugt bei symmetrischen Strömungsverhältnissen über beide Ventilkolben an den Leitungen 11 und 12 ein gleich hohes Druckniveau, das jedoch um die Durchlaufwiderstände gegenüber dem Zulaufdruck vor dem Steuerventil abgesenkt ist.

Die Steuerkantenpaare 44 und 45 an den Rückwirkungsräumen 33 und 34 haben in der Neutralstellung Null-Überdeckung. Nimmt man an, daß sich das Steuerventil 1 in Neutralstellung befindet und daß das Steuerorgan 46 voll geöffnet ist, wie dies bei Schnellfahrt der Fall ist, so herrscht in den Gehäuseringnuten 47 und 48 der Behälterdruck und über die Steuerkantenpaare 44 und 45 bzw. durch die Drosseln 37 und 38 fließt, je nach Qualität der Null-Überdeckung und der Höhe des oben beschriebenen Durchlaufwiderstandes des Steuerventils 1, ein mehr oder weniger großer Steuerstrom. Die relativen Spalte an den Steuerkantenpaaren 44 und 45 werden sich dabei so einstellen, daß in den Rückwirkungskammern 33 und 34 Druckgleichgewicht herrscht. Die hydraulische Rückwirkung ist also gleich Null.

Wird das Steuerventil 1 geringfügig ausgelenkt, beispielsweise im Sinne einer Rechtsdrehung, so bewegt sich der rechte Ventilkolben 17 nach unten und der linke Ventilkolben 16 nach oben. Dadurch öffnet das Steuerkantenpaar 44, während das Steuerkantenpaar 45 schließt. Die Folge ist ein gewisser Steuerstrom über die feste Drosselstelle 37 und das Steuerkantenpaar 44 und damit eine Druckabsenkung in den Rückwirkungsräumen 33 und 41. Die feste Drosselstelle 38 bleibt dabei strömungsfrei, so daß in den Rückwirkungsräumen 33 und 40 der volle Zulaufdruck herrscht. Dadurch entsteht ein linksdrehendes hydraulisches Moment, das der eingeleiteten Drehbewegung entgegenwirkt.

Da sich bei dieser sehr kleinen Bewegung die Druckverhältnisse an den Zulauf-Steuerkanten 26 und 27 und an den Rücklauf-Steueröffnungen 31 und 32 praktisch nicht ändern, findet trotz des hydraulischen Rückwirkungsmomentes keine nennenswerte Differenzdruckerhöhung in dem Servomotor 2 statt.

Die Fig. 1 und 2 zeigen deutlich den Unterschied zwischen einer Hilfskraftlenkung nach dem oben genannten Stand der Technik und nach der erfindungsgemäßen Ausführung. Die mechanische Mittenzentrierung, die durch die steile Kennlinie verdeutlicht wird, ist in der erfindungsgemäßen Ausführung nach Fig. 2 wesentlich kleiner als nach dem Stand der Technik in Fig. 1. Dagegen haben die flacheren Kennlinien der Fig. 2 einen längeren waagerechten Teil, der die Größe der summierten mechanischen und hydraulischen Zentrierkomponenten deutlich macht.

Bis hierher wurde die Erfindung anhand von Ausführungsbeispielen einer Hilfskraftlenkung mit einem Drehkolbenventil beschrieben. Das Steuerventil 1 dieser Ausführungsbeispiele enthält dabei zwei Ventilkolben 16 und 17, die in ihrer Axialrichtung gegensinnig verstellbar sind. Die Funktionen der beiden Ventilkolben 16 und 17 können mit gleicher Wirkung auf einem Ventilkolben zusammengefaßt werden. Ebenso ist es möglich, anstelle eines Drehkolbenventiles beliebige andere Vierwegeventile, d. h. Ventile mit vier Steuerkantenpaaren und mit einer beliebigen Rückwirkungseinrichtung, zu verwenden, beispielsweise ein Drehschieberventil. Ein Ausführungsbeispiel der Erfindung mit einem Drehschieberventil wird im folgenden anhand der Fig. 6 beschrieben. Gleichwirkende Teile werden dabei mit Bezugszahlen versehen, die um 100 gegenüber den Zahlen der Fig. 4 und 5 erhöht sind.

Ein Steuerventil 101 enthält einen als Drehschieber ausgebildeten Ventilkolben 116, der in einem Ventilgehäuse 115 drehbar geführt ist. In dem Ventilgehäuse 115 sind ein Zulaufanschluß 106, ein Rücklaufanschluß 107 und zwei Arbeitsanschlüsse 108 und 110 angeordnet. Zwei Zulauf-Steueröffnungen 126 und 127 sowie zwei Rücklauf-Steueröffnungen 131 und 132 sind in einem schematischen Querschnitt durch das Steuerventil 101 dargestellt.

Zwei Rückwirkungsräume 133 und 134 nehmen zwei Rückwirkungskolben 54 bzw. 55 auf, die über eine nur schematisch dargestellte Verbindung 56 auf den Ventilkolben 116 wirken. Die beiden Rückwirkungsräume 133 und 134 stehen über je eine feste Drosselstelle 137 bzw. 138 in Verbindung mit der Servopumpe 103.

Die Rückwirkungsräume 133 und 134 können über je ein Steuerkantenpaar 144 bzw. 145 bei einer Verdrehung des Ventilkolbens 116 aus seiner Neutralstellung heraus über ein Steuerorgan 146 mit einem Behälter 104 verbunden werden. Das Steuerorgan 146 weist dabei - wie in den beiden ersten Ausführungsbeispielen - einen Drosselquerschnitt auf, der in Abhängigkeit von der Fahrzeuggeschwindigkeit veränderbar ist. Die Steuerkantenpaare 144 und 145 sind in einem weiteren schematischen Querschnitt durch das Steuerventil 101 dargestellt. Der Zusammenhang zwischen den beiden Querschnitten ist durch die Verbindung 56 schematisch dargestellt.

Zwischen den Zulauf-Steueröffnungen 126 und 127 einerseits und den festen Drosselstellen 137 und 138 andererseits ist eine Einrichtung 113 zum Anstauen des Druckmittelstromes angeordnet. Diese Einrichtung zum Anstauen des Druckmittelstromes ist in Fig. 6 durch eine Drossel 150 gebildet, die zwischen dem Zulaufanschluß 106 und der Rückwirkungseinrichtung 105 angeordnet ist. Die Rückwirkungseinrichtung ist bei diesem Ausführungsbeispiel gebildet durch die beiden Steuerkantenpaare 144, 145, die Rückwirkungsräume 133, 134 und das Steuerorgan 146.

Anstelle der Drossel 150 kann ein federbelastetes Stauventil verwendet werden, wie dies in dem Ausführungsbeispiel der Fig. 5 dargestellt ist.

Die Funktion dieses Ausführungsbeispieles entspricht der Funktion der beiden zuerst beschriebenen Ausführungsbeispiele.

In den bisherigen Ausführungsbeispielen wurde die Einrichtung 13 zum Anstauen des Druckmittelstromes entweder durch Drosseln oder durch Stauventile gebildet. In nahezu allen Hilfskraftlenkungen ist ein Strombegrenzungsventil vorhanden, durch das der Druckmittelstrom, der der Hilfskraftlenkung zugeführt wird, auf einen bestimmten Maximalwert begrenzt wird. Ein derartiges Strombegrenzungsventil ist meist in der Servopumpe integriert.

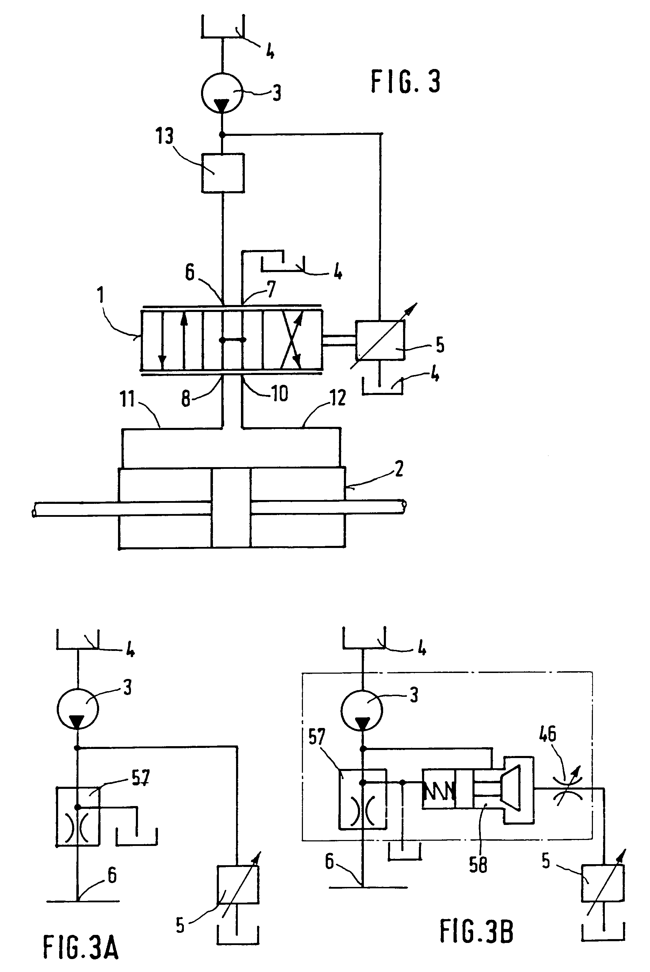

Da über einem Druckbegrenzungsventil ein Druckgefälle besteht, ergibt sich die Möglichkeit, dieses Druckgefälle auch zum Anstauen des Druckmittelstromes auszunützen. Es wird damit möglich, daß die Einrichtung 13 zum Anstauen des Druckmittelstromes durch ein Strombegrenzungsventil 57 gebildet wird. Das Strombegrenzungsventil 57 ist in Fig. 3A dargestellt.

Das Steuerorgan 46 ist in dem Ausführungsbeispiel jeweils am Rücklauf von den Rückwirkungsräumen zum Behälter angeordnet. Mit gleicher Wirkung kann das Steuerorgan jedoch auch im Zulauf von der Servopumpe vor den Rückwirkungsräumen eingeschaltet sein, wie dies beispielsweise aus der DE-A1-31 22 370 bekannt ist. In diesem Fall ist es zweckmäßig, außer dem Strombegrenzungsventil 57 auch das Steuerorgan 46 in der Servopumpe 3 zu integrieren.

Um eine Überlastung des Steuerorgans 46 zu vermeiden, wird ein Abschneideventil 58, das ebenso nahezu in jeder Hilfskraftlenkung vorhanden ist, ebenfalls in die Pumpe verlegt. Eine schematische Darstellung dieser Lösung ist in Fig. 3B dargestellt.

## Patentansprüche

1. Hilfskraftlenkung, insbesondere für Kraftfahrzeuge, mit einem Servomotor (2), einer Servopumpe (3), einem Behälter (4), einem Steuerventil (1), mit einer steuerbaren Rückwirkungseinrichtung (5) und einem Steuerorgan (46), dessen Drosselquerschnitt in Abhängigkeit von der Fahrzeuggeschwindigkeit veränderbar ist, wobei das Steuerventil (1) als Vierwegeventil ausgebildet ist, mit einem Zulaufanschluß (6; 22, 23), der mit der Rückwirkungseinrichtung (5) hydraulisch verbunden ist, mit einem Rücklaufanschluß (7) und zwei Arbeitsanschlüssen (8, 10) für zu zwei Arbeitsräumen des Servomotors (2) führende Leitungen (11, 12), dadurch **gekennzeichnet,** daß zwischen der Rückwirkungseinrichtung (5) und dem Zulaufanschluß (6; 22, 23) wenigstens eine Einrichtung (13) zum Anstauen des Druckmittelstromes angeordnet ist.

2. Hilfskraftlenkung nach Anspruch 1, dadurch **gekennzeichnet,** daß die Einrichtung (13) zum Anstauen des Druckmittelstromes durch eine Drossel (50, 51) gebildet ist.

3. Hilfskraftlenkung nach Anspruch 1, dadurch **gekennzeichnet,** daß die Einrichtung (13) zum Anstauen des Druckmittelstromes durch ein federbelastetes Stauventil (52, 53) gebildet ist.

4. Hilfskraftlenkung nach Anspruch 1, dadurch **gekennzeichnet,** daß die Einrichtung (13) zum Anstauen des Druckmittelstromes durch ein Strombegrenzungsventil (57) gebildet ist, das gleichzeitig als Strombegrenzungsventil für die Hilfskraftlenkung dient.

5. Hilfskraftlenkung nach Anspruch 4, dadurch **gekennzeichnet,** daß das Strombegrenzungsventil (57) in die Servopumpe (3) integriert ist.

6. Hilfskraftlenkung nach Anspruch 5, dadurch **gekennzeichnet,** daß das Steuerorgan (46) in die Servopumpe (3) integriert ist.

7. Hilfskraftlenkung nach Anspruch 6, dadurch **gekennzeichnet,** daß dem Steuerorgan (46) ein Abschneideventil (58) vorgeschaltet ist.

## Claims

1. Power steering system, in particular for motor vehicles, having a servomotor (2), a power-steering pump (3), a container (4), a control valve (1), having a controllable reaction device (5) and a control element (46), the throttle cross section of which is variable in dependence upon the vehicle speed, the control valve (1) taking the form of a four-way valve, having a supply connection (6; 22, 23), which is hydraulically connected to the reaction device (5), a return connection (7) and two operating connections (8, 10) for lines (11, 12) leading to two operating chambers of the servomotor (2), characterized in that at least one device (13) for banking the pressure medium flow is disposed between the reaction device (5) and the supply connection (6; 22, 23).

2. Power steering system according to claim 1, characterized in that the device (13) for banking the pressure medium flow is formed by a throttle (50, 51).

3. Power steering system according to claim 1, characterized in that the device (13) for banking the pressure medium flow is formed by a spring-loaded retaining valve (52, 53).

4. Power steering system according to claim 1, characterized in that the device (13) for banking the pressure medium flow is formed by a flow-limiting valve (57), which simultaneously serves as a flow-limiting valve for the power steering system.

5. Power steering system according to claim 4, characterized in that the flow-limiting valve (57) is integrated into the power-steering pump (3).

6. Power steering system according to claim 5, characterized in that the control element (46) is integrated into the power-steering pump (3).

7. Power steering system according to claim 6, characterized in that a cut-off valve (58) is disposed upstream of the control element (46).

## Revendications

1. Direction assistée, notamment pour véhicules à moteur, comportant un servomoteur (2), une servopompe (3), un réservoir (4), une soupape de commande (1), un dispositif de contre-réaction (5) commandé et un organe de commande (46) dont la section d'étranglement peut être modifiée en fonction de la vitesse du véhicule, dans laquelle la soupape de commande (1) est constituée par une soupape à quatre voies, comportant un raccord d'amenée (6; 22, 23) qui est connecté au dispositif de contre-réaction (5), un raccord de retour (7) et deux raccords actifs (8, 10) couplés à deux conduits d'amenée (11, 12) de deux chambres de travail du servomoteur (2), **caractérisée en ce que**, entre le dispositif de contre-réaction (5) et le raccord d'amenée (6; 22, 23), se trouve au moins un dispositif (13) agencé pour arrêter le fluide sous pression.

2. Direction assistée selon la revendication 1, **caractérisée en ce que** le dispositif (13) pour arrêter le fluide sous pression est constitué d'un étranglement (50, 51).

3. Direction assistée selon la revendication 1, **caract**é**ris**é**e en ce que** le dispositif (13) pour arrêter le fluide sous pression est constitué d'une soupape d'arrêt (52, 53) mise en contrainte par un ressort.

4. Direction assistée selon la revendication 1, **caract**é**ris**é**e en ce que** le dispositif (13) pour arrêter le fluide sous pression est constitué par une soupape de limitation de flux (57) qui sert simultanément de soupape de limitation de flux pour la direction assistée.

5. Direction assistée selon la revendication 4, **caract**é**ris**é**e en ce que** la soupape de limitation de flux (57) est intégrée dans la servopompe (3).

6. Direction assistée selon la revendication 5, **caract**é**ris**é**e en ce que** l'organe de commande (46) est intégré dans la servopompe.

7. Direction assistée selon la revendication 6, **caractérisée en ce que** l'organe de commande (46) est monté en aval d'une soupape de coupure (58).
